# EUROPÄISCHE PATENTANMELDUNG

(11) **EP 4 350 912 A1**
(43) Veröffentlichungstag der Anmeldung: **10.04.2024**
(21) Anmeldenummer: 23000135.6
(22) Anmeldetag: 29.09.2023
(51) Int. Cl.: H02G 3/04, H02G 3/06

(54) **KABELRINNE**

(30) Priorität: 29.09.2022 DE 102022003622
(71) Anmelder: PohlCon GmbH, 12057 Berlin (DE)
(72) Erfinder: Schubert, Karl, DE-10439 Berlin (DE); Tempelhoff, Catrin, DE-10551 Berlin (DE)
(74) Vertreter: Jungblut & Seuss

(57) **Zusammenfassung**

Die Erfindung betrifft eine Kabelrinne mit zumindest zwei Rinnenelementen (1), wobei jedes Rinnenelement (1) an seinen beiden Enden (5) jeweils mit einem Verbindungsabschnitt (6) versehen ist, wobei jeder Verbindungsabschnitt (6) zumindest zwei erste Rastelemente (7) aufweist, wobei die Verbindungsabschnitte (6) baugleich mit den Bereichen des Rinnenelementes (1) zwischen den Verbindungsabschnitten (6) ausgebildet sind, wobei zumindest ein Verbindungselement (8) eingerichtet ist, welches an seinen zumindest zwei Enden (12) jeweils zumindest zwei zweite Rastelemente (9) aufweist, und wobei die ersten Rastelemente (7) in die zu den ersten Rastelementen (7) komplementären zweiten Rastelemente ineinander einrastbar sind. Sie ist dadurch gekennzeichnet, dass der Verbindungsabschnitt (6) und das Verbindungselement (8) dadurch miteinander verrastbar sind, dass das Verbindungselement (8) in Richtung der Längserstreckung des Rinnenelementes (1) in den Verbindungsabschnitt (6) einführbar oder der Verbindungsabschnitt (6) in das Verbindungselement (8) einführbar ist, wobei die zweiten Rastelemente (9) des Verbindungselements (6) ausschließlich in Seitenwandungen (10) des Verbindungselementes (6) angeordnet sind.

## Beschreibung

### Gebiet der Erfindung

Die Erfindung betrifft eine Kabelrinne mit zumindest zwei Rinnenelementen, wobei jedes Rinnenelement mit einem Rinnenboden und zwei einander gegenüberstehenden und an den Längsseiten des Rinnenbodens angeordneten Rinnenwänden ausgestattet ist, wobei jedes Rinnenelement an seinen beiden Enden jeweils mit einem Verbindungsabschnitt versehen ist, wobei jeder Verbindungsabschnitt zumindest zwei erste Rastelemente aufweist, wobei die Verbindungsabschnitte baugleich mit den Bereichen des Rinnenelementes zwischen den Verbindungsabschnitten ausgebildet sind, wobei zumindest ein Verbindungselement eingerichtet ist, welches an seinen zumindest zwei Enden jeweils zumindest zwei zweite Rastelemente aufweist, wobei die ersten Rastelemente in die zu den ersten Rastelementen komplementären zweiten Rastelemente ineinander einrastbar sind.

### Stand der Technik und Hintergrund der Erfindung

Kabelrinnen des eingangs genannten Aufbaus sind beispielsweise aus der nicht vorveröffentlichten Literaturstelle DE 10 2022 001 072 bekannt. Das hierbei zu Grunde liegende Funktionsprinzip ist, dass ein Verbindungselement über ein Rinnenelement aufgeschoben wird, und zwar in Richtung orthogonal zur Längserstreckung der Kabelrinne, und so verrastet wird.

Varianten, wobei die Verbindung zwischen zwei Rinnenelementen durch Ineinanderfügen in Längsrichtung der Rinnenelemente erfolgt, sind beispielsweise aus der Literaturstelle DE 10 2020 103 309 A1 bekannt. Bei den insofern bekannten Varianten sind die Verbindungsbereiche der Rinnenelemente anders ausgebildet als der Bereich eines Rinnenelementes zwischen den Verbindungsbereichen. Dies ist in der Herstellung aufwändig. Dies impliziert zudem, dass bei der insofern bekannten Kabelrinne keine Standard-Rinnenelemente eingesetzt werden können, welche über ihre gesamte Längserstreckung gleich bzw. uniform ausgebildet sind. Schließlich ist anzumerken, dass die insofern bekannten Rinnenelemente miteinander verschraubt werden müssen, wozu einerseits zusätzliche baulich separate Verbindungselemente, wie Schrauben, Muttern, Nieten und dergleichen zur Verfügung gestellt werden müssen und andererseits der Montageaufwand erheblich erhöht ist.

### Technisches Problem der Erfindung

Der Erfindung liegt daher das technische Problem zugrunde, eine Kabelrinne anzugeben, welche auf einfache Weise aufzubauen ist Standard-Rinnenelemente nutzt und so preiswert in der Produktion ist.

### Grundzüge der Erfindung und bevorzugte Ausführungsformen

Zur Lösung dieses technischen Problems lehrt die Erfindung, dass der Verbindungsabschnitt und das Verbindungselement dadurch miteinander verrastbar sind, dass das Verbindungselement in Richtung der Längserstreckung des Rinnenelementes in den Verbindungsabschnitt einführbar oder der Verbindungsabschnitt in das Verbindungselement einführbar ist, wobei die zweiten Rastelemente des Verbindungselements ausschließlich in Seitenwandungen (10) des Verbindungselementes angeordnet sind.

Mit der Erfindung werden eine erheblich vereinfachte Herstellung und Montage ermöglicht. Es können insbesondere Standard-Rinnenelemente eingesetzt werden, welche typischerweise in der gesamten Längserstreckung der Rinnenwände Ausnehmungen aufweisen, welche als erste Rastelemente wirken können. Zudem erlaubt die erfindungsgemäße Anordnung das Kürzen der Rinnenelemente an einem beliebigen Ende, ohne dass dadurch die Verbindbarkeit mit weiteren Rinnenelementen beeinträchtigt wird. Die Verbindung zweier Rinnenelemente ist schließlich eine Arbeit weniger Sekunden und bedarf keines besonderen manuellen Geschicks.

Im Rahmen der Erfindung sind verschiedene vorteilhafte Weiterbildungen möglich.

So können die ersten Rastelemente als Rastausnehmungen und die zweiten Rastelemente als Rastvorsprünge ausgebildet sind, wobei die Anordnung auch umgekehrt vorgesehen sein kann. In ersterem Fall fungieren ohnehin entlang der Längserstreckung der Rinnenwände angeordnete und in regelmäßigen Abständen verteilte Ausnehmungen in den Verbindungsbereichen als Rastausnehmungen.

Bevorzugt ist es, wenn die zweiten Rastelemente federelastisch in Richtung orthogonal zur Längserstreckung des Rinnenelementes auslenkbar sind. Die kann auf verschiedene Weisen erreicht werden. In einer speziellen Ausführungsform sind die Enden eines Verbindungselementes dergestalt ausgebildet, dass sie per Hand nach außen oder nach innen, bezogen auf eine Mittenlinie des Verbindungselementes, und abhängig davon, ob das Verbindungselement in das Rinnenelement eingelegt oder hierüber übergestülpt wird, gebogen werden können und beim einrasten wieder in die ursprüngliche Stellung zurück federn. Dies kann im Einzelnen so erreicht werden, dass die Bereiche von Seitenwandungen des Verbindungselementes, in welchen die zweiten Rastelemente angeordnet sind, nicht mit einem Boden des Verbindungselementes verbunden sind. Diese Bereiche werden dann nur von Seitenwandungen des Verbindungselementes getragen, was ein federelastisches Biegen leicht möglich macht. Außerhalb dieser Bereiche sind die Seitenwandungen des Verbindungselementes natürlich mit dem Boden des Verbindungselementes verbunden.

In einer weiterhin bevorzugten Ausführungsform sind in die ersten Rastelemente und/oder die zweiten Rastelemente Verriegelungselemente einführbar, welche ein Lösen der Rastverbindung verhindern. Dabei können die Verriegelungselemente in dem ersten Rastelement oder in dem zweiten Rastelement verrastbar sein, händisch oder mit Werkzeug unlösbar oder händisch oder mit Werkzeug lösbar.

Verbindungselemente können in verschiedenster Weise ausgebildet sein. So kann ein Verbindungselement zwei Enden aufweisen, welche in einem Winkel von 0° bis 300°, insbesondere etwa 0° oder 90°, zueinander stehen, bezogen auf eine Mittenachse des Verbindungselementes. Ein Verbindungselement mit dem Winkel 0° verbindet dann zwei benachbarte Rinnenelemente dergestalt miteinander, dass sie miteinander fluchten. Bei einem Winkel von mehr als 0° handelt es bei dem Verbindungselement um einen Bogen, der besagten Winkel überstreicht. Ob dabei der Bereich des Verbindungselementes zwischen den Enden als Kreisbogen oder in einer Winkelstufe oder in mehreren Winkelstufen ausgebildet ist, ist produktionstechnischen Überlegungen überlassen.

Ebenso kann das Verbindungselement drei Enden aufweisen und so als T-Stück ausgebildet sein. Dabei kann das T-Stück rechtwinkelig oder schiefwinkelig gestaltet sein. Das Verbindungselement kann auch vier Enden aufweisen und als Kreuzung ausgebildet sein, entweder in +-Form oder in x-Form, also rechtwinkelig oder schiefwinkelig. Natürlich sind auch Verbindungselemente mit mehr als vier Enden denkbar.

Im Folgenden wird die Erfindung anhand von lediglich Ausführungsbeispiele darstellenden Figuren näher erläutert. Es zeigen
- Figur 1:: eine erfindungsgemäße Kabelrinne mit einem Bogen in Explosionsdarstellung
- Figur 2:: eine erfindungsgemäße Kabelrinne mit ineinander gefügten Rinnenelement und Verbindungselement,
- Figur 3:: eine Variante der Figur 2 mit eingerastetem Verriegelungselement,
- Figur 4:: den Gegenstand der Figur 3 mit abgebogener Handhabe des eingerasteten Verriegelungselementes,
- Figur 5:: eine Variante der Erfindung mit einem als T-Stück ausgebildeten Verbindungselement, und
- Figur 6:: eine Variante der Erfindung mit einem als Kreuzung ausgebildeten Verbindungselement.

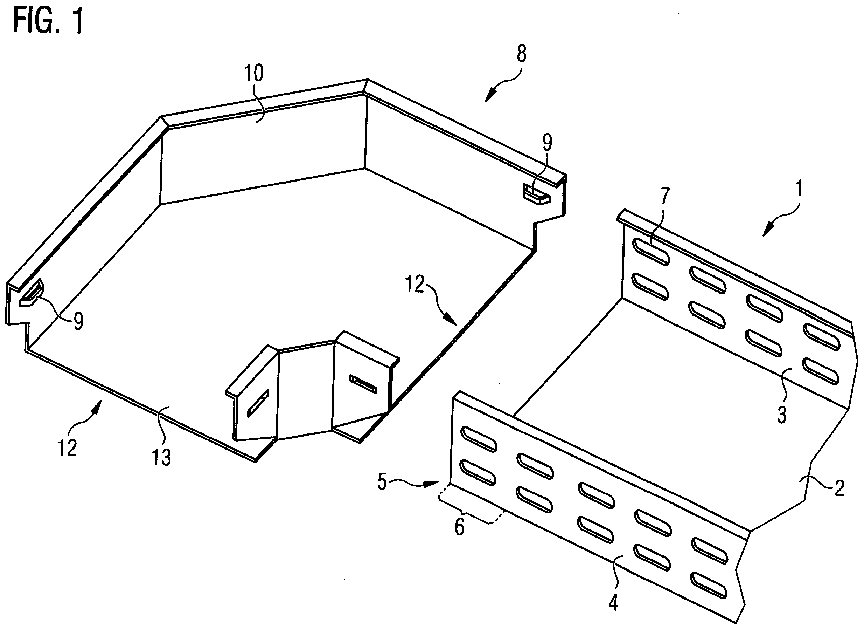

In der Figur 1 erkennt man eine Kabelrinne mit zumindest zwei Rinnenelementen 1, wobei eine der beiden Rinnenelemente 1 der Übersichtlichkeit halber nicht dargestellt ist. Das zweite Rinnenelement 1 schließt an das linksseitige Ende 12 des Verbindungselementes 6 an.

Das Rinnenelement 1 weist einem Rinnenboden 2 und zwei einander gegenüberstehende und an den Längsseiten des Rinnenbodens 2 angeordnete Rinnenwänden 3, 4. Jedes Rinnenelement 1 weist an seinen beiden Enden 5 jeweils mit einen Verbindungsabschnitt 6 auf, wobei im Rahmen jedes Verbindungsabschnitts 6 zumindest zwei erste Rastelemente 7 eingerichtet sind. Man erkennt zudem, dass das Rinnenelement 1 in Richtung seiner Längserstreckung gleichförmig ausgestaltet, ist, hier mit einer Reihe von Ausnehmungen entlang der Rinnenwände 3, 4. Die Verbindungsabschnitte 6 unterscheiden sich nicht von den Bereichen zwischen den Verbindungsabschnitten 6. Die endständigen Ausnehmungen übernehmen dabei die Funktion der ersten Rastelemente 7.

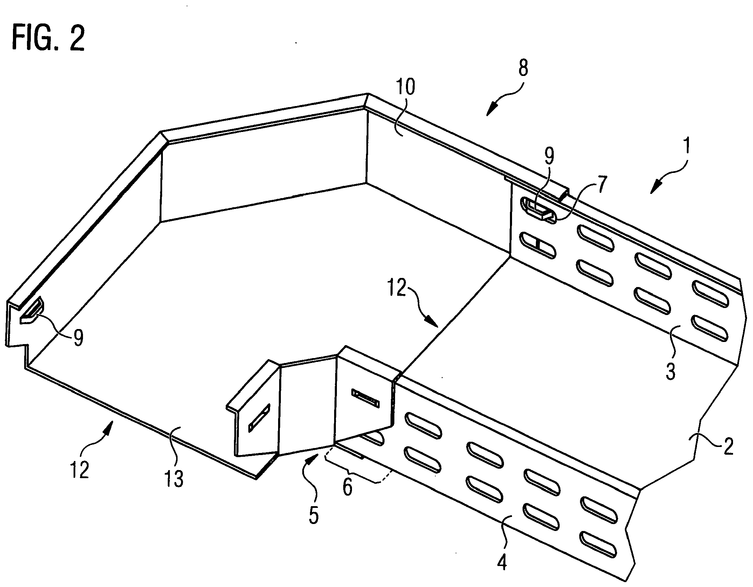

Man erkennt des Weiteren ein Verbindungselement 8, welches an seinen zumindest beiden Enden 12 (die zueinander um 90° abgewinkelt sind, bezogen auf die Ebene des Bodens 13 des Verbindungselementes 8) jeweils zwei zweite Rastelemente. Einer vergleichenden Betrachtung der Figuren 1 und 2 ist entnehmbar, dass die ersten Rastelemente 7 in die zu den ersten Rastelementen 7 komplementären zweiten Rastelemente und so ineinander einrastbar sind. Dabei sind der Verbindungsabschnitt 6 und das Verbindungselement 8 dadurch miteinander verrastbar, dass der Verbindungsabschnitt 6 in das Verbindungselement 8 einführbar ist. Man erkennt schließlich, dass die zweiten Rastelemente 9 des Verbindungselements 6 ausschließlich in Seitenwandungen 10 des Verbindungselementes 6 angeordnet sind.

Kabelrinne nach Anspruch 1, dadurch gekennzeichnet, dass die ersten Rastelemente (7) als Rastausnehmungen (7) und die zweiten Rastelemente (9) als Rastvorsprünge (9) ausgebildet sind, wobei die Anordnung auch umgekehrt vorgesehen sein kann.

Aus der vergleichenden Betrachtung der Figuren 1 und 2 ist weiterhin entnehmbar, dass die zweiten Rastelemente 9 federelastisch in Richtung orthogonal zur Längserstreckung des Rinnenelementes 1 auslenkbar sind. Dies ist dadurch realisiert, dass die zweiten Rastelemente 9 in Bereichen der Seitenwandungen 10 des Verbindungselementes 6 angeordnet sind, welche nicht mit einem Boden 13 des Verbindungselementes 6 verbunden sind.

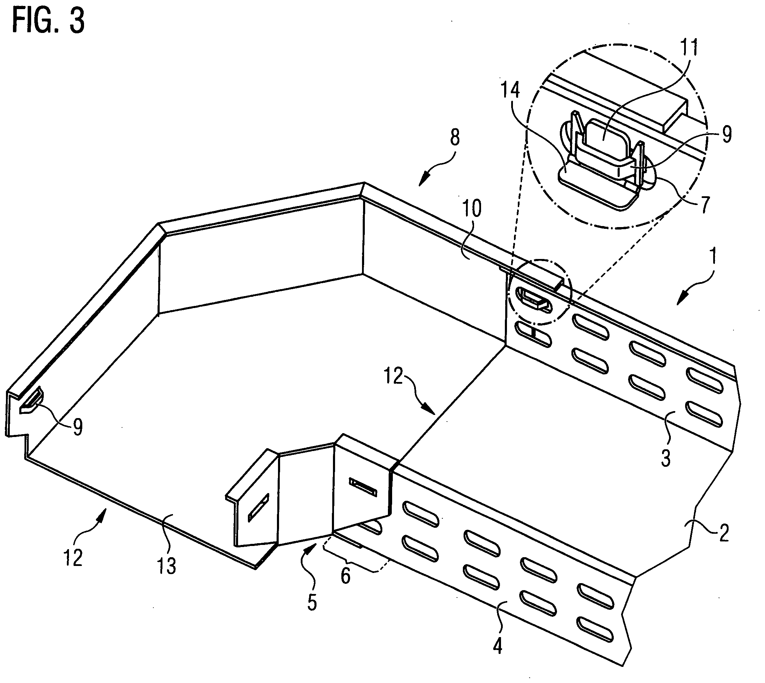

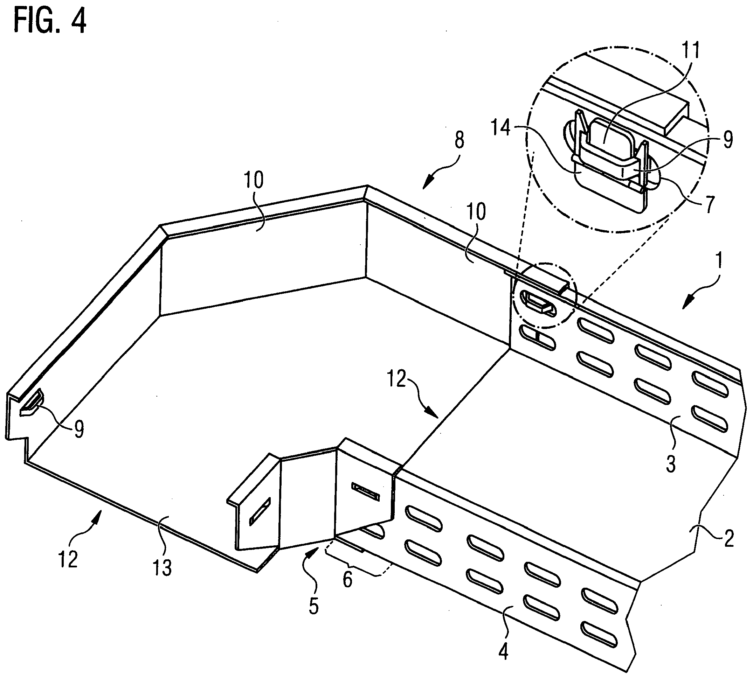

Den Figuren 3 und 4 ist entnehmbar, dass in die die zweiten Rastelemente 9 Verriegelungselemente 11 einführbar sind, welche ein Lösen verhindern. Hierzu sind die zweiten Rastelemente 9 als beidendig feste Laschen ausgeführt, welche oben und unten offen sind, wobei die Laschen in die als Ausnehmungen ausgebildeten ersten Rastelemente 7 einrasten. Im Ausführungsbeispiel weist ein Verriegelungselement 11 eine als Handhabe funktionierende Abwinkelung 14 auf. Das Verriegelungselement 11 wird dann mit der Abwinkelung 14 nach unten weisend in das in das erste Rastelement 7 eingerastete zweite Rastelement 9 eingeschoben und darin verrastet. Schließlich wird die Abwinkelung 14 gegen eine Rinnenwand 3, 4 umgebogen, so dass sie mit der Rinnenwand 3, 4 fluchtet.

In den Figuren 1 bis 4 ist eine Ausführungsform dargestellt, wobei das Verbindungselement 6 zwei Enden 12 aufweist, welche in einem Winkel von 90° zueinander stehen. Natürlich sind alle geometrisch möglichen anderen Winkel möglich, insbesondere auch 0°, wo dann die aneinander angeschlossenen Rinnenelemente 1 miteinander fluchten.

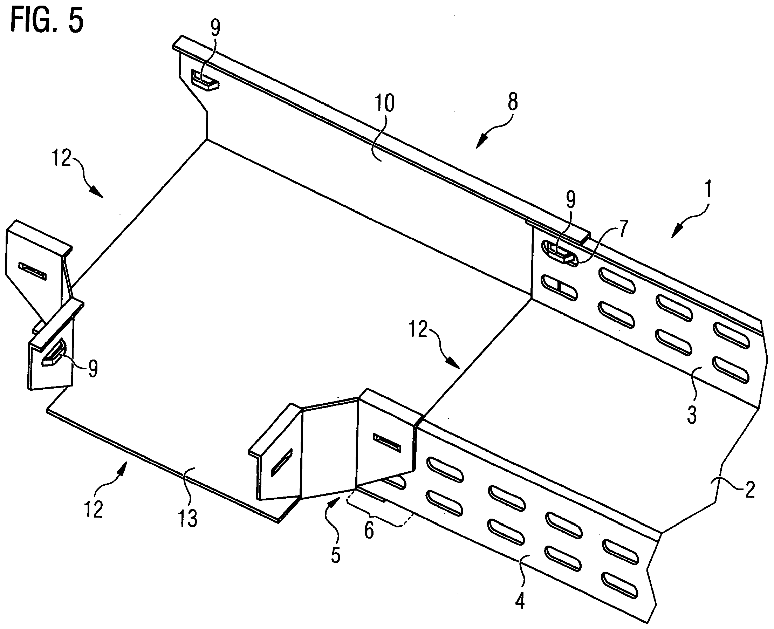

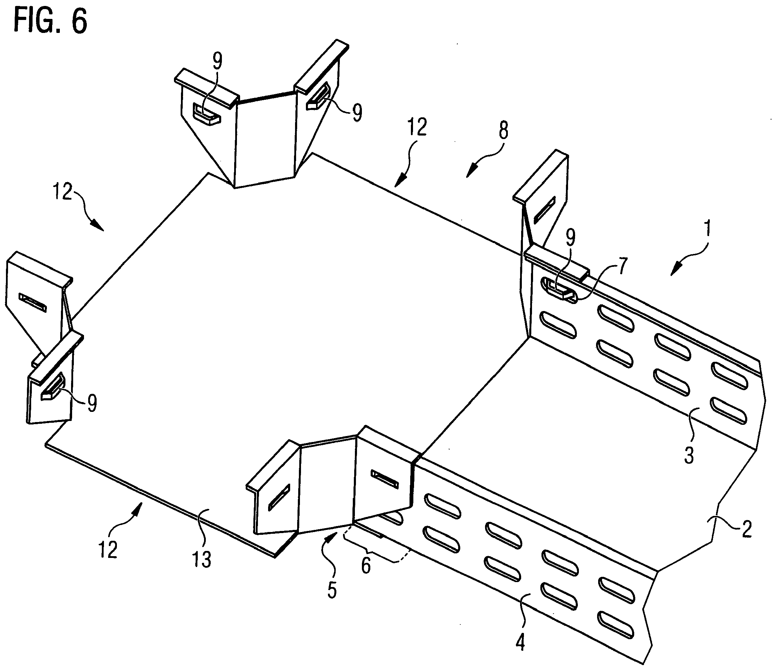

Die Figuren 5 und 6 zeigen, dass das Verbindungselement 6 aber auch drei oder vier Enden 12 aufweisen kann, dadurch ein T-Stück oder eine Kreuzung bildend.

## Patentansprüche

1. Kabelrinne mit zumindest zwei Rinnenelementen (1),
wobei jedes Rinnenelement (1) mit einem Rinnenboden (2) und zwei einander gegenüberstehenden und an den Längsseiten des Rinnenbodens (2) angeordneten Rinnenwänden (3, 4) ausgestattet ist,
wobei jedes Rinnenelement (1) an seinen beiden Enden (5) jeweils mit einem Verbindungsabschnitt (6) versehen ist, wobei jeder Verbindungsabschnitt (6) zumindest zwei erste Rastelemente (7) aufweist,
wobei die Verbindungsabschnitte (6) baugleich mit den Bereichen des Rinnenelementes (1) zwischen den Verbindungsabschnitten (6) ausgebildet sind,
wobei zumindest ein Verbindungselement (8) eingerichtet ist, welches an seinen zumindest zwei Enden (12) jeweils zumindest zwei zweite Rastelemente (9) aufweist, wobei die ersten Rastelemente (7) in die zu den ersten Rastelementen (7) komplementären zweiten Rastelemente ineinander einrastbar sind,
**dadurch gekennzeichnet,**
**dass** der Verbindungsabschnitt (6) und das Verbindungselement (8) dadurch miteinander verrastbar sind, dass das Verbindungselement (8) in Richtung der Längserstreckung des Rinnenelementes (1) in den Verbindungsabschnitt (6) einführbar oder der Verbindungsabschnitt (6) in das Verbindungselement (8) einführbar ist, wobei die zweiten Rastelemente (9) des Verbindungselements (6) ausschließlich in Seitenwandungen (10) des Verbindungselementes (6) angeordnet sind.

2. Kabelrinne nach Anspruch 1, **dadurch gekennzeichnet, dass** die ersten Rastelemente (7) als Rastausnehmungen (7) und die zweiten Rastelemente (9) als Rastvorsprünge (9) ausgebildet sind, wobei die Anordnung auch umgekehrt vorgesehen sein kann.

3. Kabelrinne nach Anspruch 1 oder 2, **dadurch gekennzeichnet, dass** die zweiten Rastelemente (9) federelastisch in Richtung orthogonal zur Längserstreckung des Rinnenelementes (1) auslenkbar sind.

4. Kabelrinne nach Anspruch 3, **dadurch gekennzeichnet, dass** die zweiten Rastelemente (9) in Bereichen der Seitenwandungen (10) des Verbindungselementes (6) angeordnet sind, welche nicht mit einem Boden (13) des Verbindungselementes (6) verbunden sind.

5. Kabelrinne nach einem der Ansprüche 1 bis 4, **dadurch gekennzeichnet, dass** in die ersten Rastelemente (7) und/oder die zweiten Rastelemente (9) Verriegelungselemente (11) einführbar sind, welche ein Lösen verhindern.

6. Kabelrinne nach einem der Ansprüche 1 bis 5, **dadurch gekennzeichnet, dass** die Verriegelungselemente (1) in dem ersten Rastelement (7) oder in dem zweiten Rastelement (9) verrastbar sind.

7. Kabelrinne nach einem der Ansprüche 1 bis 6, **dadurch gekennzeichnet, dass** das Verbindungselement (6) zwei Enden (12) aufweist, welche in einem Winkel von 0° bis 300°, insbesondere etwa 0° oder 90°, zueinander stehen, bezogen auf eine Mittenachse des Verbindungselementes (6).

8. Kabelrinne nach einem der Ansprüche 1 bis 6, **dadurch gekennzeichnet, dass** das Verbindungselement (6) drei Enden (12) aufweist und als T-Stück ausgebildet ist, oder dass das Verbindungselement (6) vier Enden (12) aufweist und als Kreuzung ausgebildet ist.
